Europäisches Patentamt

European Patent Office

Office européen des brevets

(19)

(11) Publication number: **0 180 946 B1**

# EUROPEAN PATENT SPECIFICATION

(45) Date of publication of patent specification: **19.06.91**  (51) Int. Cl.⁵: **H04N 9/77, H04N 9/077**

(21) Application number: **85113989.9**

(22) Date of filing: **04.11.85**

(54) **Color imaging apparatus.**

(30) Priority: **02.11.84 JP 230250/84**
**28.11.84 JP 250895/84**

(43) Date of publication of application:
**14.05.86 Bulletin  86/20**

(45) Publication of the grant of the patent:
**19.06.91 Bulletin  91/25**

(84) Designated Contracting States:
**DE FR GB**

(56) References cited:
**GB-A- 2 135 853**
**US-A- 4 163 250**

(73) Proprietor: **VICTOR COMPANY OF JAPAN,**
**LIMITED**
**3-12, Moriya-cho**
**Kanagawa-ku Yokohama(JP)**

(72) Inventor: **Takanashi, Itsuo**
**3-5, Shiomidai**
**Isogo-ku Yokohama(JP)**
Inventor: **Nakagaki, Shintaro**
**Shonan Raifu Taun Komayori Danchi 14-402**
**Ooba 5450**
**Fujisawa-shi Kanagawa-ken(JP)**
Inventor: **Ichimura, Hiroshi**
**1-16-10, Todoroki**
**Seatagaya-ku Tokyo(JP)**
Inventor: **Kuriyama, Takashi**
**7-5-2, Toshima**
**Kita-ku Tokyo(JP)**

(74) Representative: **Pellmann, Hans-Bernd,**
**Dipl.-Ing. et al**
**Patentanwaltsbüro Tiedtke-**
**Bühling-Kinne-Grupe-Pellmann-Grams-Struif**
**Bavariaring 4**
**W-8000 München 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a single-tube color imaging apparatus having a striped color filter, and more particularly to a technique for reducing the amount of information representing the nonlinearity of beam deflection system and storing it into a memory which is addressed to generate a reference signal with which a color-multiplexed video signal is combined to generate color difference signals.

In a single-tube color imaging apparatus, an optical image is focused through a striped color filter onto a photoelectrical conversion target to develop an electrostatic image which is scanned by an electron beam. The color filter comprises successively arranged recurrent groups of color stripes of different colors. As the beam is scanned across the target, a color-multiplexed video signal is generated. This video signal comprises a "carrier" having a frequency inversely proportional to the interval at which the recurrent groups of the filter are arranged, the carrier being modulated in phase with the individual stripes of each recurrent group and in amplitude with the intensity of elemental pictures of the incident image. The video signal is combined with a reference carrier in a color demodulator to produce color difference signals. The reference carrier is derived from the pickup tube by uniformly illuminating the target with light of a predetermined color to generate a signal of at least one "field" length representing the nonlinearity of the beam in a raster field and storing it into a field memory prior to operation of the imaging apparatus. During operation, the memory is repeatedly addressed to regenerate the reference carrier. An arrangement of this type is disclosed in GB-A-2 135853.

It is an object of the present invention to provide a color imaging apparatus which minimizes the amount of nonlinearity information to be stored in a memory to allow reduction of the memory capacity for economy purposes.

In a color imaging apparatus of the present invention, an optical image is focused on a photoelectrical conversion target of a color image pickup tube through a color stripe filter having a plurality of successively arranged recurrent groups of different color stripes and converted to an electrostatic image which is scanned line-by-line in a rectangular raster field by an electron beam. Prior to operation, the target is illuminated uniformly by light of a predetermined color passing through the color filter to generate a reference carrier having a frequency inversely proportional to the intervals at which the recurrent stripe groups are arranged. To minimize the amount of beam's nonlinearity information contained in the reference carrier, frequency variations of the reference signal are detected and stored into a field memory by read/write means during write mode and read out of the memory during read mode. A frequency comparator is operable during the read mode to detect a frequency difference between the output signal from a variable-frequency-and-phase oscillator and an output signal from the target. A phase comparator is provided for detecting a phase difference between the output of the oscillator and the output of the target at the start of each line scan. The outputs of the field memory and the frequency and phase comparators are combined to control the oscillator to cause it to regenerate the reference carrier. A color demodulator combines them to produce color difference signals.

The present invention will be described in further detail with reference to the accompanying drawings, in which:

Fig. 1 is a block diagram of a single-tube color imaging apparatus according to a first embodiment of the invention;

Fig. 2 is an enlarged illustration of a portion of the color filter of Fig. 1;

Fig. 3 is an illustration of an optical filter arrangement comprising the color filter and an index filter; and

Fig. 4 is a block diagram of a second embodiment of the invention.

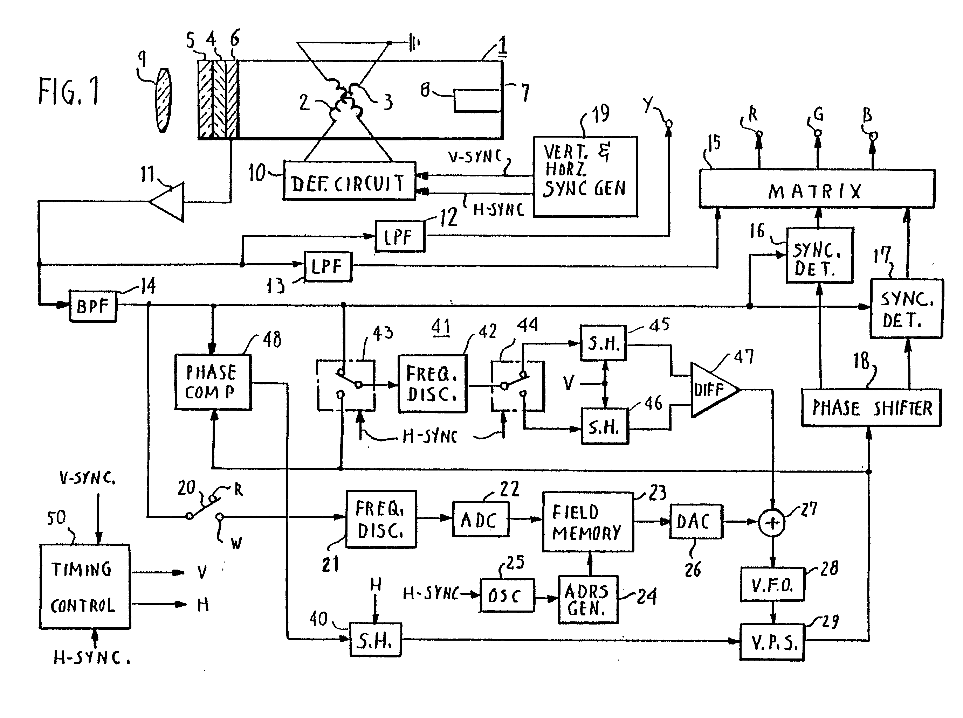

Referring now to Fig. 1, a color imaging apparatus according to an embodiment of the invention includes a color television pickup tube 1 having a pair of vertical and horizontal deflection yokes 2 and 3, and a color stripe filter 4 affixed to the rear of a transparent faceplate 5 of an evacuated envelope 7. A photoelectrical conversion target 6 is affixed to the rear of the filter 4. A lens 9 focuses an object scene on the surface of the target 6 through the color filter 4. A video signal is developed by the photoconductive layer of the conversion target 6 when it is scanned by an electron beam emitted from an electron gun 8 and applied to a preamplifier 11.

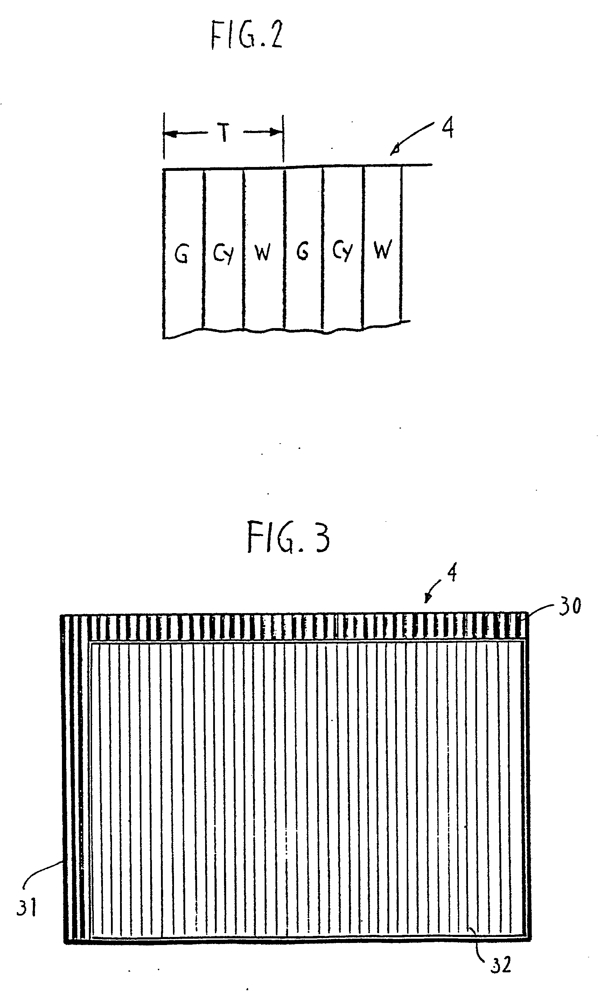

Color filter 4 comprises a plurality of recurrent groups of stripes of a first color F1 (which may be one of the primary colors of blue, green and red), a second color F2 (which is cyan or magenta if F1 is blue, cyan or yellow if F1 is green, or yellow or magenta if F1 is red), and a transparent stripe for passing white light. These stripes have equal width and extend vertically across the target 6 and successively arranged across the horizontal dimension of the target such that the color stripes of each group recyclically occur at intervals T. The filter 4 has therefore a spatial frequency inversely proportional to the periodic intervals T. A typical example of the color filter 4 is shown in Fig. 2 in which the first color stripes F1 are green and the second color stripes F2 are cyan. Alternatively, the color filter may comprise recurrent groups of stripes of red, green and blue of different widths with the groups being arranged at intervals T.

Light passing through the color filter 4 is optically modulated by the striped color filter pattern and develops an electrostatic image on the conversion target 6 which is read by the electron beam. The beam is deflected in a line-by-line rectangular raster scan format by the horizontal and vertical yokes 2 and 3 to which sweep currents are supplied from a deflection circuit 10, which is in turn responsive to horizontal and vertical sync pulses supplied fro a vertical- and horizontal-sync generator 19. For purposes of illustration, it is assumed that the first filter stripe F1 is green and the second stripe F2 is cyan as illustrated in Fig. 2. The light incident on the green stripes is removed of its red and blue components to allow its green component to pass to target 6, while the light incident on the cyan stripes is removed of the red component (R) to allow its green (G) and blue (B) components to pass to target 6. Therefore, if the target is illuminated with an imagewise radiation of white light (equal energies at all wavelengths throughout the visible spectrum), the color-multiplexed signal contains (6), (B + G) and (R + B + G) components derived respectively from stripes F1, F2 and W. Therefore, the video signal S obtained from the target 6 is given by:

$$S = \tfrac{1}{3}(3G + 2B + R) + A \cdot \sin(\omega t + \phi + \theta) + \tfrac{A}{2}\sin(2\omega t - \phi + 2\theta) \quad (1)$$

where,
$$A = -(\sqrt{3}/\pi)(B^2 + B \cdot R + R^2)^{1/2}$$
$$\phi = \tan^{-1}(B - R)/\sqrt{3}(R + B)$$

$\omega = 2\pi/T = 2\pi f_1$ (where $f_1$ represents the frequency of the "carrier"). The phase component $\phi$ indicates a phase deviation from the reference phase of the "carrier" and represents the spatial difference between the individual filter stripes within each recurrent group, and the phase component $\theta$ represents a phase deviation attributed to the nonlinearity of the deflection system.

The output of preamplifier 11 is applied to a low-pass filters 12 and 13 and to a band-pass filter 14. Low-pass filter 12 has a cut-off frequency immediately below the carrier frequency $f_1$ to pass the luminance component of the video signal to a luminance output terminal Y. Low-pass filter 13 has a cut-off frequency much lower than the cut-off frequency of filter 12 to pass the baseband of the video signal to a matrix circuit 15, this baseband signal being represented by the first term of Equation 1. The "carrier" component of the video signal is represented by the second term of Equation 1, this carrier component being passed through the band-pass filter 14 to first inputs of synchronous detectors 16 and 17.

The output of band-pass filter 14 is also applied through a mode select switch 20 to a frequency discriminator 21 to allow it to detect frequency variations that occur in a reference carrier that is generated during write mode in a manner as will be described hereinbelow. Through an analog-to-digital converter 22 the output of frequency discriminator 21 is applied to a field memory 23. Field memory 23 is addressed by an address generator 25 clocked by an oscillator 25. Oscillator 25 is of a resettable type in which the oscillator output is reset to a predetermined phase in response to a horizontal sync pulse applied thereto from sync generator 19.

As illustrated in Fig. 3, the color filter 4 includes a horizontal band 30 of alternating opaque and transparent "field" index stripes successively arranged at the same intervals as the color filter stripes of image incident area 32 alongside its upper edge within the rectangular raster area and a vertically extending band 31 of likewise opaque and transparent "line" index stripes arranged at the same intervals as field index stripes 30 alongside the line-start edge of image incident area 32 within the rectangular raster scan area. Image pickup tube 1 is preferably provided with a light guide, not shown, to uniformly illuminate the "field" and "line" index stripes 30 and 31 with external light during write and read modes of the field memory 23.

Field index band 30 is scanned by the electron beam several times to develop a "field" index signal immediately preceding a "field" video signal and the line index band 31 is scanned to develop a "line" index signal immediately preceding each "line" video signal.

During write mode which is prior to the normal operation of the imaging apparatus, switch 20 is manually turned to "write" position w and the target 6 is illuminated uniformly with light of a predetermined color to generate a "carrier" at frequency $f_1$ in addition to the field and line index signals. The frequency variations of these signals are detected by frequency discriminator 21 and digitized by A/D converter 22 and written into field memory 23 at a constant rate.

During normal operation, switch 20 is returned to "read" position R and the target 6 is illuminated with the optical image of an object, producing a color-multiplexed video signal comprising a "carrier" modulated in amplitude with the intensity of picture elements of the image and in phase with the individual stripes of each recurrent group of the filter 4, as represented by the second term of Equation 1. The modulated carrier has a phase difference φ with respect to the reference carrier. Target 6 is also illuminated with light rays passing through the field and line index bands 30 and 31 to produce field and line index signals, respectively, as in the write mode. Field memory 23 is read at constant rate to supply the stored data to a digital-to-analog converter 26 whose output is coupled to an adder 27.

A variable frequency oscillator 28 responds to the output of field memory 23 via adder 27 by regenerating the field and line index signals and the reference carrier having the same frequency variations as the original. The output of variable frequency oscillator 28 is applied to a variable phase shifter 29 which is responsive to a voltage stored in a sample-and-hold circuit 40 to control the phase of the output of oscillator 29 so that it synchronizes with the output of target 6.

Frequency difference between the field index signal from band-pass filter 14 and the regenerated field index signal from variable phase shifter 29 is detected by frequency comparator 41 at the beginning of each field scan. Specifically, the frequency comparator 41 includes a frequency discriminator 42 which takes an input signal selectively from the output of band-pass filter 14 and the output of variable phase shifter 29 via an electronic switch 43 and supplies its output through an electronic switch 44 selectively to sample-and-hold circuits 45 and 46. Electronic switches 43 and 44 are supplied with horizontal sync pulses from sync generator 19 to cause the frequency discriminator 42 to detect the frequency variations of the alternately applied input signals during the time the field index stripes 30 are scanned. Sample-and-hold circuits 45 and 46 are supplied with a vertical "window" pulse V from a timing control circuit 50 which is timed to sample the frequency variations of field index signal fed from the band-pass filter 14 and sample the frequency variations of the regenerated field index signal fed from variable phase shifter 29. Thus, sample-and-holds 45 and 46 respectively store the frequency variations of the field index signals supplied from target 6 and variable phase shifter 29 until the end of the field scan. A differential amplifier 47 compares the frequency variations stored in sample-and-holds 45 and 46 and supplies an error voltage to adder 27. This error voltage represents a difference in frequency between the two field index signals. This frequency error signal is advantageously used during the following field scan to control the variable frequency oscillator 28 to prevent undesirable asynchronism which might occur between the reference and modulated "carriers" in the event that the carrier component is lost when the incident image is wholly or partially dark.

Phase difference between the line index signal and the output of

from band-pass filter 14 and the regenerated line index signal from variable phase shifter 29 is detected by a phase comparator 48 and stored into the sample-and-hold 40 in response to a horizontal "window" pulse H supplied from timing control circuit 50. Variable phase shifter 29 is responsive to the detected phase difference at the beginning of each line scan to establish a proper phase relationship with the modulated carrier from band-pass filter 14. The reference carrier thus generated is represented by $\sin(\omega t + \theta)$.

For applications in which the lost carrier compensation is not required, the sample-and-hold circuits 45 and 46 can be replaced with RC (resistor-capacitor) networks to utilize the frequency variations continuously detected throughout the field scan as a frequency control signal for the variable frequency oscillator 28.

The reference carrier from variable phase shifter 29 is applied to phase shifter 18 where it is shifted in phase by +60° and -60° with respect to the modulated "carrier" and applied respectively to synchronous detectors 16 and 17. Color difference signals are produced by the synchronous detectors 16 and 17 and applied to color matrix circuit 15 where they are combined with the baseband of the color-multiplexed signal from low-pass filter 13 to generate primary color signals.

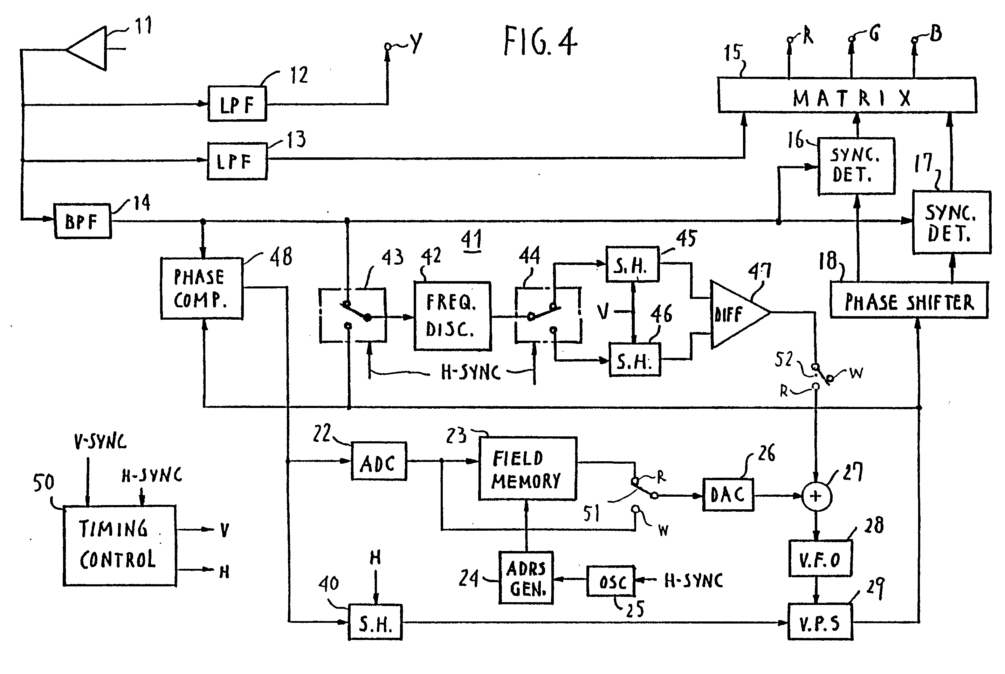

In an embodiment shown in Fig. 4, the nonlinearity indicating frequency variations are derived by a phase-locked loop essentially formed by the phase comparator 48, field memory 23, variable frequency oscillator 28 and variable phase shifter 29. Instead of being derived from frequency discriminator 21, the input of A/D converter 22 is taken from phase comparator 48.

During write mode switch 51 is turned to the write position W to supply the output of A/D converter 22 to D/A converter 26 to control the variable frequency oscillator 28 with the phase difference detected by phase comparator 48, while the target 6 is being illuminated uniformly by the reference light as mentioned above. A switch 52 is turned to the write position W to disconnect the output of differential amplifier 47 from adder 27. The instantaneous value of the phase difference signal from phase comparator 48 is digitized by A/D converter 22 and stored into field memory 23 at a constant rate as the phase comparison proceeds. The output of A/D converter 22 is converted to analog form by D/A converter 26 and drives the variable frequency oscillator 28. At the start of each line scan, sample-and-hold 40 is sampled in response to the horizontal window pulse H to reset the variable phase shifter 29 to a proper phase in accordance with the phase difference derived in phase comparator 48 by comparison between the line index signal from target 6 and the output of phase shifter 29. The output of phase shifter 29 thus varies with the nonlinearity of the beam deflection system. The write mode continues until the memory 23 is filled with a frequency variation signal having a length of at least one field.

During read mode, switches 51 and 52 are returned to the read position R to couple the output of field memory 23 to D/A converter 26 and couple the output of differential amplifier 47 to adder 27. The operation of the Fig. 4 embodiment during read mode is identical to that of the Fig. 1 embodiment.

## Claims

1. Color imaging apparatus wherein an optical image is focused on a photoelectrical conversion target (6) of a color image pickup tube (1) through a color stripe filter (4) having a plurality of successively arranged recurrent groups of different color stripes and converted to an electrostatic image which is scanned line-by-line in a rectangular raster field by an electron beam, and wherein a color demodulator (16-18) is provided to combine the output signal of the target (6) with a reference carrier which is synchronized therewith to generate color signals, characterized by:
   means (21; 22, 26-29, 48) for detecting frequency variations of a reference signal which is derived from said target when same is illuminated uniformly by light of a predetermined color passing through said color filter;
   a field memory (23);
   read/write means (24, 25) for writing said frequency variations of at least one field into the memory during write mode and reading the frequency variations out of the memory during read mode;
   variable frequency and phase oscillator means (28, 29);
   a frequency comparator (41) operable during the read mode for detecting a frequency difference between an output signal from said oscillator means and an output signal from said target;
   a phase comparator (48) operable during the read mode for detecting a phase difference between an output signal from said oscillator means and said output signal from the target at the start of each line scan; and
   means (27) for coupling the outputs of said field memory (23) and said frequency and phase comparators (41, 48) to said oscillator means (28, 29) to cause same to generate said reference carrier.

2. Color imaging apparatus as claimed in claim 1, charactereized in that said frequency variation is detected by a frequency discriminator (21).

3. Color imaging apparatus as claimed in claim 1, characterized in that said frequency variation is detected by a phase-locked loop including said phase comparator (48) and said oscillator means (28, 29).

4. Color imaging apparatus as claimed in any one of the preceding claims, further characterized by index means having a first index portion (31) arranged to be scanned by said electron beam at the beginning of each line for generating an index signal during said write mode and written into said field memory (23) by said read/write means and generating the same index signal during said read mode, and in that sample-and-hold means (40, 50) are provided for storing a phase difference detected by said phase comparator (48) between said index signal of the read mode and the output of said oscillator means (28, 29) at the beginning of each line for a line interval and controlling the phase of said oscillator means with said phase difference stored in said sample-and-hold means (40, 50).

5. Color imaging apparatus as claimed in any one of the preceding claims, characterized in that said index means further includes a second index portion (30) arranged to be scanned by said beam at the beginning of each field for generating an index signal during said write mode and written into said memory (23) by said read/write means (24, 25) and generating the same index signal during the read mode, and in that sample-and-hold means (45, 46, 50) are provided for storing a frequency difference detected by said frequency comparator (41) between said last-mentioned index signal of the read mode and the output of said oscillator means (28, 29) at the beginning of each field for a field interval and controlling the frequency of said oscillator means with the phase difference stored in the sample-and-hold means (45, 46, 50).

## Revendications

1. Appareil de prise de vues en couleur dans lequel une image optique est focalisée sur une cible (6) de conversion photoélectrique d'un tube (1) d'analyse d'image en couleur à travers un filtre coloré (4) à bandes comportant une pluralité de groupes récurrents, disposés successivement de différentes bandes colorées et est converti en une image électrostatique qui est balayée, ligne par ligne, dans une zone de trame rectangulaire, par un faisceau d'électrons, et dans lequel un démodulateur de couleur (16-18) est présent pour combiner le signal de sortie de la cible (6) avec une porteuse de référence qui est synchronisée avec ce signal pour engendrer des signaux de couleur, **caractérisé** par :

des moyens (21 ; 22, 26-29, 48) pour détecter les variations de fréquence d'un signal de référence qui est obtenu à partir de ladite cible lorsque celle-ci est éclairée uniformément par la lumière d'une couleur prédéterminée traversant ledit filtre coloré ;

une mémoire (23) de zone de trame ;

des moyens de lecture/écriture (24, 25) pour inscrire lesdites variations de fréquence d'au moins une zone de trame dans la mémoire pendant le mode écriture et pour extraire les variations de fréquence de la mémoire pendant le mode lecture ;

des moyens formant oscillateurs de fréquence et de phase variables (28, 29) ;

un comparateur (41) de fréquence pouvant fonctionner pendant le mode lecture pour détecter une différence de fréquence entre un signal de sortie en provenance desdits oscillateurs et un signal de sortie en provenance de ladite cible ;

un comparateur (48) de phase pouvant fonctionner pendant le mode lecture pour détecter une différence de phase entre un signal de sortie en provenance desdits oscillateurs et le signal de sortie en provenance de la cible au début de chaque balayage de ligne ; et

un moyen (27) pour coupler les sorties de ladite mémoire de zone de trame (23) et lesdits comparateurs de fréquence et de phase (41, 48) aux oscillateurs (28, 29) pour faire engendrer par ces derniers ladite porteuse de référence.

2. Appareil de prise de vues en couleur selon la revendication 1, **caractérisé** en ce que ladite variation de fréquence est détectée par un discriminateur (21) de fréquence.

3. Appareil de prise de vues en couleur selon la revendication 1, **caractérisé** en ce que ladite variation de fréquence est détectée par une boucle à phase bloquée comprenant le comparateur (48) de phase et les oscillateurs (28, 29).

4. Appareil de prise de vues en couleur selon l'une quelconque des revendications précédentes, **caractérisé** en outre par un moyen de repérage comportant une première partie de repérage (31) disposée de manière à être balayée par ledit faisceau d'électrons au début de chaque ligne afin d'engendrer un signal de repérage pendant ledit mode d'écriture et pour être inscrite dans ladite mémoire (23) de zone de trame par lesdits moyens de lecture/écriture et pour engendrer le même signal de repérage pendant ledit mode lecture, et en ce que des moyens échantillonneurs/bloqueurs (40, 50) sont présents pour stocker une différence de phase détectée par ledit comparateur (48) de phase entre ledit signal de repérage du mode lecture et la sortie des oscillateurs (28, 29) au début de chaque ligne pendant un intervalle de ligne et pour commander la phase des oscillateurs à l'aide de la différence de phase stockée dans lesdits moyens échantillonneurs/bloqueurs (40, 50).

5. Appareil de prise de vues en couleur selon l'une quelconque des revendications précédentes, **caractérisé** en ce que ledit moyen de repérage comprend, en outre, une seconde partie de repérage (30) disposée de manière à être balayée par ledit faisceau au début de chaque zone de trame pour engendrer un signal de repérage pendant le mode écriture et à être inscrite dans ladite mémoire (23) par les moyens de lecture/écriture (24, 25) et pour engendrer le même signal de repérage pendant le mode lecture, et en ce que des moyens échantillonneurs/bloqueurs (45, 46, 50) sont présents pour stocker une différence de fréquence détectée par ledit comparateur (41) de fréquence entre ledit signal de repérage mentionné en dernier du mode lecture et la sortie desdits oscillateurs (28, 29) au début de chaque zone de trame pendant un intervalle de trame et pour commander la fréquence desdits oscillateurs à l'aide de la différence de phase stockée dans le moyen échantillonneur-bloqueur (45, 46, 50).

## Ansprüche

1. Farbbildaufnahmegerät, in dem ein optisches Bild durch ein Farbstreifenfilter (4) mit einer Vielzahl von aufeinanderfolgend angeordneten wiederholten Gruppen verschiedener Farbstreifen hindurch auf eine fotoelektrische Wandler-Fangelektrode (6) einer Farbbildaufnahmeröhre (1) fokussiert und zu einem Ladungsbild umgesetzt wird, das mittels eines Elektronenstrahls zeilenweise in einem rechteckigen Rasterfeld abgetastet wird, und in dem ein Farbdemodulator (16 - 18) zum Kombinieren des Ausgangssignals der Fangelektrode (6) mit einem damit synchronisierten Bezugsträger vorgesehen ist, um Farbsignale zu erzeugen, gekennzeichnet durch

eine Einrichtung (21; 22, 26 - 19, 48) zum Erfassen von Frequenzabweichungen eines Bezugssignals, das von der Fangelektrode hergeleitet wird, wenn diese gleichförmig mit einem durch das Farbfilter hindurchtretenden Licht einer vorbestimmten Farbe beleuchtet wird,

einen Halbbildspeicher (43),

eine Schreib/Lese-Einrichtung (24, 25) für das Einschreiben der Frequenzabweichungen von mindestens einem Halbbild in den Speicher während einer Schreibbetriebsart und für das Auslesen der Frequenzabweichungen aus dem Speicher während einer Lesebetriebsart,

eine oszillatoreinrichtung (28, 29) mit veränderbarer Frequenz und veränderbarer Phase,

einen Frequenzvergleicher (41), der während der Lesebetriebsart für das Ermitteln einer Frequenzdiffernz zwischen einem Ausgangssignal der Oszillatoreinrichtung und einem Ausgangssignal der Fangelektrode betreibbar ist,

einen Phasenvergleicher (48), der während der Lesebetriebsart für das Ermitteln einer Phasendifferenz zwischen einem Ausgangssignal der Oszillatoreinrichtung und dem Ausgangssignal der Fangelektrode zu Beginn einer jeden Zeilenabtastung betreibbar ist, und

eine Einrichtung (27), die die Ausgangssignale des Halbbildspeichers (23), und der Frequenz/Phasenvergleicher (41, 48) mit der Oszillatoreinrichtung (28, 29) verbindet, damit diese den Bezugsträger erzeugt.

2. Farbbildaufnahmegerät nach Anspruch 1, dadurch gekennzeichnet, daß die Frequenzabweichung mittels eines Frequenzdiskriminators (21) erfaßt wird.

3. Farbbildaufnahmegerät nach Anspruch 1, dadurch gekennzeichnet, daß die Frequenzabweichung mittels eines Phasenkopplungskreises erfaßt wird, der den Phasevergleicher (48) und die Oszillatoreinrichtung (28, 29) enthält.

4. Farbbildaufnahmegerät nach einem der vorangehenden Ansprüche, ferner gekennzeichnet durch eine Markenvorrichtung mit einem zum Abtasten mittels des Elektronenstrahls zu Beginn einer jeden Zeile angeordneten ersten Markenteil (31) für das erzeugen eines mittels der Schreib/Lese-Einrichtung in den Halbbildspeicher (23) während der Schreibbetriebsart einzuschreibenden Markensignals und zum Erzeugen des gleichen Markensignals während der Lesebetriebsart, und dadurch, daß eine Abfrage/Halte-Einrichtung (40, 50) zum Speichern einer durch den phasenvergleicher (48) ermittelten phasendifferenz zwischen dem Markensignal bei der Lesebetriebsart und dem Ausgangssignal der Oszillatoreinrichtung (28, 29) zu Beginn einer jeden Zeile für ein Zeilenintervall und zum Steuern der Phase der Oszillatoreinrichtung mit der in der Abfrage/Halte-Einrichtung (40, 50) gespeicherten Phasendifferenz vorgesehen ist.

5. Farbbildaufnahmegerät nach einem der vorangehenden Ansprüche, dadurch gekennzeichnet, daß die Markenvorrichtung ferner einen zum Abtasten mit dem Elektronenstrahl zu Beginn eines jeden Halbbilds angeordneten zweiten Markenteil (30) zum Erzeugen eines mittels der Schreib/Lese-Einrichtung (24, 25) in den Speicher (23) einzuschreibenden Markensignals während der Schreibbetriebsart und zum Erzeugen des gleichen Markensignals während der Lesebetriebsart enthält, und dadurch, daß eine Abfrage/Halte-Einrichtung (45, 46, 50) zum Speichern einer durch den Frequenzvergleicher (41) ermittelten Frequenzdifferenz zwischen dem letzteren Markensignal bei der Lesebetriebsart und dem Ausgangssignal der Oszillatoreinrichtung (28, 29) zu Beginn eines jeden Halbbilds über ein Halbbildintervall und zum Steuern der Frequenz der Oszillatoreinrichtung mit der in der Abfrage/Halte-Einrichtung (45, 46, 50) gespeicherten Frequenzdifferenz vorgesehen ist.

FIG.1

# FIG.2

| G | Cy | W | G | Cy | W |

# FIG. 3

FIG.4